## Europäisches Patentamt

## European Patent Office

## Office européen des brevets

(11) Veröffentlichungsnummer: **0 385 107**
**A1**

# EUROPÄISCHE PATENTANMELDUNG

(21) Anmeldenummer: **90101541.2**

(22) Anmeldetag: **26.01.90**

(51) Int. Cl.5: **A01D 41/12, A01F 12/48**

(30) Priorität: **28.02.89 DE 3906186**

(43) Veröffentlichungstag der Anmeldung:
**05.09.90 Patentblatt 90/36**

(84) Benannte Vertragsstaaten:
**AT DE DK ES FR GB IT SE**

(71) Anmelder: **KHD AGRARTECHNIK GMBH**
**Postfach 1264**
**D-8882 Lauingen(DE)**

(72) Erfinder: **Hönl, Josef**
**Paul-Böhm-Strasse 26**
**D-8882 Lauingen(DE)**
Erfinder: **Teufel, Beate**
**Schertlin-Strasse 11 1/50**
**D-8900 Augsburg(DE)**

(74) Vertreter: **Haft, Berngruber, Czybulka**
**Postfach 14 02 46 Hans-Sachs-Strasse 5**
**D-8000 München 5(DE)**

(54) **Mähdrescher.**

(57) Der Mähdrescher weist eine Schneid- und Zu-fuhranordnung für das Erntegut, eine Dreschanord-nung mit Kornabscheidevorrichtung, eine in Längs-richtung des Mähdreschers liegende Siebanordnung und eine Gebläseanordnung auf, die in Fahrtrichtung des Mähdreschers gesehen, vor der Siebanordnung vorgesehen ist. Die Gebläseanordnung besteht aus einem Querstromgebläse (12), das sich quer zur Fahrtrichtung des Mähdreschers über die gesamte Breite der Siebanordnung (2) erstreckt.

FIG.2

Die Erfindung betrifft einen Mähdrescher mit einer Schneid- und Zufuhranordnung für das Erntegut, einer Dreschanordnung mit Kornabscheidevorrichtung, einer in Längsrichtung des Mähdrescher liegenden Siebanordnung und mit einer Gebläseanordnung, die, in Fahrtrichtung des Mähdreschers gesehen, vor der Siebanordnung vorgesehen ist.

Bei einem derartigen Mähdrescher wird das geerntete Gut über die Zufuhrvorrichtung der Dreschanordnung zugeführt, in der die Körner abgeschieden werden. Das ausgedroschene Stroh wird dabei über einen Hordenschüttler und mehrere Steilstufen dem rückwärtigen Ende des Mähdreschers zugeführt. Die ausgedroschenen Körner sowie Spreu und nicht ausgedroschene Ähren gelangen von der Kornabscheidevorrichtung auf einen Vorbereitungsboden, von dem aus sie einer Siebanordnung zugeführt werden. Vor der Siebanordnung, die durch eine geeignete Schütteleinrichtung in Schwingungen versetzt wird, ist ein Gebläse angeordnet, um die Körner von der Spreu und der sogenannten Überkehr zu trennen. Die kleinen verhältnismäßig schweren Körner fallen dabei durch die Siebanordnung und werden über einen Körnerelevator einem Korntank zugeführt, während die leichtere Spreu über das rückwärtige Ende der Siebanordnung hinaus weggeblasen wird.

Der Wirkungsgrad des Trennens von Spreu und Körnern ist um so höher, je regelmäßiger das Erntegut der Anordnung zugeführt wird und je gleichmäßiger die Reinigungsluft die Siebanordnung durchströmt. Die günstigsten Ergebnisse werden dann erreicht, wenn sich der Mähdrescher in waagrechter Stellung befindet, da bei Bodenunebenheiten und insbesondere an Abhängen sich das Erntegut entweder bereits auf dem Vorbereitungsboden oder auf der Siebanordnung, der Schwerkraft folgend, auf einer Seite ansammelt, so daß keine optimale Trennung der Spreu von den Körnern möglich ist.

Es wurde bereits vorgeschlagen in Längsrichtung des Vorbereitungsbodens und der Siebanordnung, d.h. in Fahrtrichtung des Mähdreschers, im Abstand voneinander angeordnete parallele Leitbleche vorzusehen, die verhindern sollen, daß sich das ausgedroschene Erntegut auf der unteren Seite des geneigt fahrenden Mähdreschers ansammelt. Bei ungleichmäßiger Beaufschlagung der Siebanordnung ist jedoch der von der Gebläseanordnung stammende Luftstrom ungleichmäßig wirksam, wodurch keine optimale Trennung von Spreu und Korn gewährleistet ist.

Aus der DE-OS 35 04 003 ist ein Mähdrescher bekannt, der eine aus einem Obersieb und einem Untersieb bestehende Siebanordnung aufweist, wobei sowohl das Obersieb als auch das Untersieb in eine Vielzahl von in Längsrichtung des Mähdreschers gesehen parallel nebeneinander liegende Siebabschnitte unterteilt ist und jeder Siebabschnitt an einer in Längsrichtung des Mähdreschers liegenden im wesentlichen waagrecht und mittig zum Siebabschnitt verlaufenden Achse pendelnd aufgehängt ist. Jedem Siebabschnitt ist dabei ein eigenes Axialgebläse zugeordnet.

Bei einem derartigen Mähdrescher wird durch die Vielzahl von Axialgebläsen dafür gesorgt, daß auch bei Fahrten über geneigtes Gelände ein gleichmäßig hoher Wirkungsgrad der Trennung von Spreu und Körnern erfolgt.

Aufgabe der vorliegenden Erfindung ist es, einen Mähdrescher zu schaffen von besonders einfachem und wirkungsvollen Aufbau und der mit hohem Wirkungsgrad eine Trennung von Spreu und Körnern ermöglicht.

Ausgehend von einem Mähdrescher der eingangs näher genannten Art wird zur Lösung dieser Aufgabe vorgeschlagen, daß die Gebläseanordnung aus einem Querstromgebläse besteht, das sich quer zur Fahrtrichtung des Mähdreschers über die gesamte Breite der Siebanordnung erstreckt.

Das Querstromgebläse ist vorteilhafterweise durch quer zur Längsachse angeordnete Trennwände in eine Vielzahl von parallel zueinander angeordneten Sektoren unterteilt.

Vorzugsweise ist das Querstromgebläse mit einer Steuervorrichtung versehen, die die Gebläsedrehzahl als Funktion der Körnerverlustanzeige in der Siebanordnung steuert, wobei diese Steuervorrichtung einen Spindelmotor aufweisen kann. Bei einem anderen vorteilhaften Ausführungsbeispiel ist die Steuervorrichtung mit einem Inklinometer verbunden, das die Gebläsedrehzahl als Funktion der Neigung des Mähdreschers in seiner Längsachse steuert.

Durch die vorgeschlagene Ausgestaltung der Gebläseanordnung als Querstromgebläse wird der Vorteil erzielt, daß der Aufbau vereinfacht und damit die Herstellung verbilligt wird. Das Querstromgebläse mit einer Vielzahl von senkrecht zu seiner Längsachse angeordneten Trennwänden, die entsprechend der Anzahl der Siebabschnitte eine Anzahl von Gebläsesektoren bilden, ersetzt die bisher erforderlichen Axialgebläse, die einzeln angesteuert werden mußten. Für das Querstromgebläse ist nurmehr eine einzige, die Drehzahl regelnde Steuer- und Antriebsvorrichtung erforderlich.

Außerdem wird mit dem Querstromgebläse ein gleichmäßiges Windprofil über die gesamte Siebkastenbreite erreicht.

Für die zusätzliche Belüftung einer oder mehrerer Fallstufen/Siebe kann durch einen zusätzlichen Windkanal das erforderliche Luftvolumen von dem Hauptkanal abgezweigt werden.

Im folgenden wird die Erfindung anhand der Zeichnung näher erläutert, in der ein vorteilhaftes Ausführungsbeispiel dargestellt ist. Es zeigen:

Fig. 1 schematische einen Längsschnitt durch einen Teil eines erfindungsgemäßen Mähdreschers und

Fig. 2 einen teilweisen Querschnitt durch den Mähdrescher.

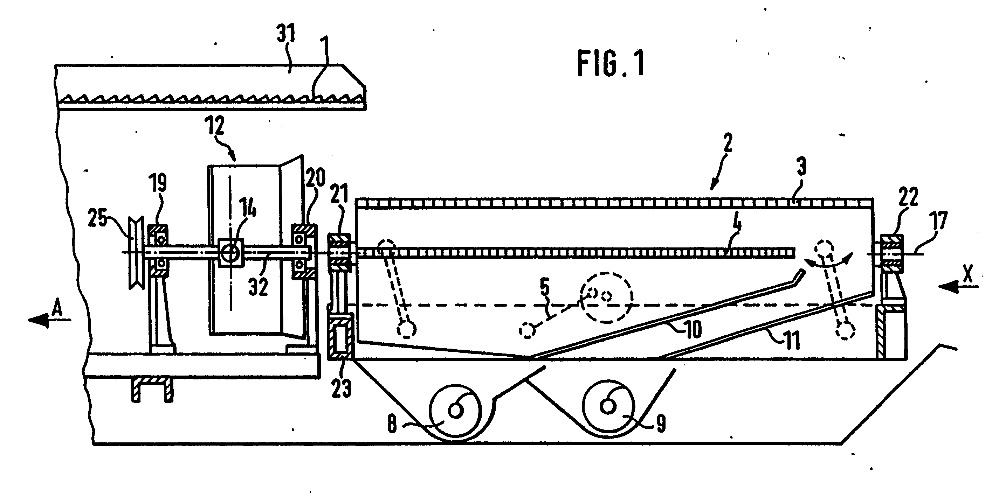

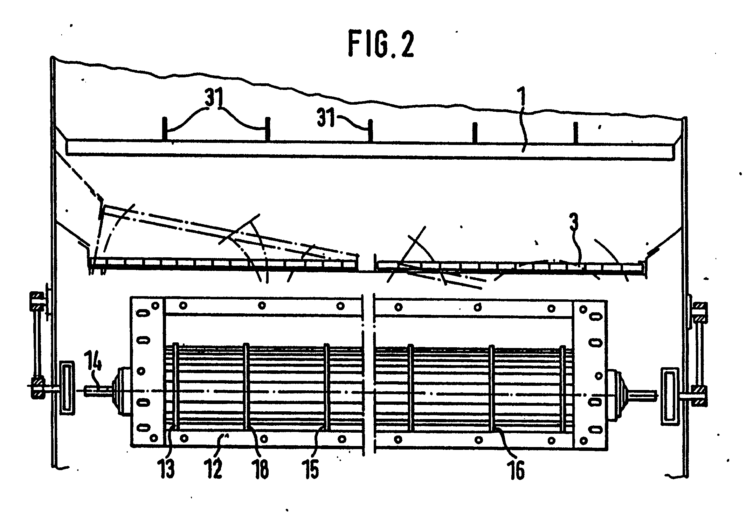

In Fig. 1 ist schematisch ein Längsschnitt durch einen Teil eines Mähdreschers dargestellt, dessen Fahrtrichtung beim Arbeitseinsatz durch den Pfeil A angedeutet ist. Der Mähdrescher weist eine nicht dargestellte Schneideinrichtung auf, von der das Erntegut über eine ebenfalls nicht dargestellte Zufuhranordnung einer Dreschanordnung mit Kornabscheidevorrichtung zugeführt wird. Nach dem Ausdreschen des Erntegutes gelangen die Körner zusammen mit der Spreu und dem Kurzstrohanteil auf einen Vorbereitungsboden 1, von dem sie einer Siebanordnung 2 zugeführt werden, wobei der Vorbereitungsboden 1, wie aus Fig.2 ersichtlich, mit einer Anzahl von parallel zueinander angeordneten, sich in Längsrichtung erstreckenden Leitblechen 31 versehen sein kann.

Vom Ende des Vorbereitungsbodens 1 fällt das Körner-Spreu-und Kurzstrohgemisch auf die Siebanordnung 2, die im gewählten Beispiel aus einem Obersieb 3 und einem Untersieb 4 besteht. Das Obersieb und das Untersieb können in einem Rahmen 23 über zwei Lagerstellen 21, 22 derart gelagert sein, daß die Siebanordnung 2 um eine in Längsrichtung des Mähdreschers gelegene Achse 17 pendelnde Bewegungen ausführen kann.

Der Rahmen 23 mit der Siebanordnung 2 wird durch einen Exzenterantrieb 5 in schwingende Bewegungen versetzt, so daß durch die dabei erfolgende Schüttelbewegung der Siebanordnung die Körner durch die Maschen vom Obersieb 3 und Untersieb 4 auf ein Führungsblech 10 gelangen, von wo aus sie in den Körnerelevator 8 abgegeben werden. Die Spreu und die Kurzstrohanteile werden unter der Wirkung der oszillierenden Bewegung unter der Einwirkung eines Gebläses 12 über die Siebe nach hinten ausgetragen. Vom Körner elevator 8 aus gelangen die Körner zu einem nicht dargestellten Korntank. Nicht ausgedroschene Ähren, die sogenannte Überkehr fällt vom Ende der Siebanordnung 2 auf ein weiteres Führungsblech 11 und von da in das mit 9 bezeichnete Überkehrsystem, das mit Wurfelevatoren versehen sein kann, um so diese Ähren erneut auf den Vorbereitungsboden 1 zu befördern.

Unterhalb des Vorbereitungsbodens 1 und vor der Siebanordnung 2 ist das Gebläse 12 vorgesehen, das erfindungsgemäß als Querstromgebläse ausgestaltet ist. Die Längsachse 14 des Querstromgebläses 12 erstreckt sich dabei quer zur Fahrtrichtung A des Mähdreschers und zwar im wesentlichen über die gesamte Breite der Siebanordnung 2. Das Querstromgebläse 12 kann dabei um eine in der Längsrichtung des Mähdreschers angeordnete Längsachse 32 pendelnde Bewegungen ausführen, um so der Neigungsverstellung der Siebanordnung zu folgen. Zu diesem Zweck ist das Querstromgebläse 12 an einer in der Längsachse 32 liegenden Welle befestigt, die in zwei Lagern 19, 20 drehbar gehalten ist.

Wie Fig. 2 erkennen läßt, ist das Querstromgebläse 12 mit einer Vielzahl von vorzugsweise kreisförmigen im Abstand voneinander angeordneten, sich quer zur Längsachse 14 des Querstromgebläses erstreckenden Trennwänden 13, 15, 16, 18 versehen, die das Querstromgebläse in einzelne Sektoren unterteilen. Jeder dieser Sektoren ist nun einem Siebabschnitt zugeordnet, wobei die einzelnen Siebabschnitte durch die Trennwände 31 voneinander getrennt sind.

Der Antrieb des Querstromgebläses 12 kann dabei in herkömmlicher Art und Weise über ein Keilriementrieb 25 erfolgen, das mit einem Elektromotor, einem Hydraulikmotor, einem Keilriemenvariator oder dem Kraftanschluß des Mähdreschers verbunden ist. Eine Regulierung der vom Querstromgebläse gelieferten Windenergie kann dabei über die Antriebsdrehzahl des Querstromgebläses erfolgen, und zwar in Abhängigkeit von der Verlustanzeige am Siebkasten. Durch entsprechende an und für sich bekannte elektronische Einrichtungen erfolgt dabei die Drehzahlverstellung für das Querstromgebläse, wobei dieses vorteilhafterweise mit einem Spindelmotor zusammenwirkt.

Ferner kann der Mähdrescher mit einem Inklinometer versehen sein, der eine Drehzahlregulierung des Querstromgebläses bei Berg- und Talfahrt ermöglicht. Je nach der Neigung des Mähdreschers in seiner Längsachse wird mehr oder weniger Erntegut auf die Siebanordnung bzw. das Erntegut durch die Siebkastenkinematik beschleunigt gegeben und demzufolge die Drehzahl des Querstromgebläses 12 an die Erntegutzufuhr angepaßt.

Mit dem erfindungsgemäßen Mähdrescher wird also der Vorteil erzielt, daß nicht nur eine gleichmäßige Beaufschlagung der einzelnen Siebabschnitte mit Windenergie durch das Querstromgebläse erfolgt, sondern dieses auch besonders einfach und wirtschaftlich aufgebaut ist, so daß mit einer einzigen Gebläseanordnung und einer einzigen Steuervorrichtung dafür bei allen Dreschzuständen des Mähdreschers eine optimale Dresch- und Reinigungsleistung gewährleistet ist.

**Ansprüche**

1. Mähdrescher mit einer Schneid- und Zufuhranordnung für das Erntegut, mit einer Dreschanordnung mit Kornabscheidevorrichtung, mit einer in Längsrichtung des Mähdreschers liegenden Siebanordnung und mit einer Gebläseanordnung, die, in Fahrtrichtung des Mähdreschers gesehen, vor der Siebanordnung vorgesehen ist, dadurch gekennzeichnet, daß die Gebläseanordnung aus einem Querstromgebläse besteht, das sich quer zur Fahrtrichtung des Mähdreschers über die gesamte Breite der Siebanordnung erstreckt.

2. Mähdrescher nach Anspruch 1, dadurch gekennzeichnet, daß das Querstromgebläse durch quer zu seiner Längsachse angeordnete Trennwände in eine Vielzahl von parallel zueinander angeordneten Sektoren unterteilt ist und daß die Siebanordnung in eine der Anzahl der Sektoren des Querstromgebläses entsprechende Anzahl von parallelen Abschnitten unterteilt ist.

3. Mähdrescher nach Anspruch 1 oder 2, dadurch gekennzeichnet, daß das Querstromgebläse mit einer Steuervorrichtung versehen ist, die die Gebläsedrehzahl als Funktion der Körnerverluste in der Siebanordnung steuert.

4. Mähdrescher nach Anspruch 3, dadurch gekennzeichnet, daß die Steuervorrichtung einen Spindelmotor aufweist.

5. Mähdrescher nach einem der vorhergehenden Ansprüche, dadurch gekennzeichnet, daß die Steuervorrichtung mit einem Inklinometer verbunden ist, das die Gebläsedrehzahl als Funktion der Neigung des Mähdreschers in seiner Längsachse steuert.

FIG.1

EP 0 385 107 A1

# FIG.2

EP 0 385 107 A1

# EUROPÄISCHER RECHERCHENBERICHT

**Europäisches Patentamt**

EP 90101541.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl⁵) |
|---|---|---|---|
| X | <u>US - A - 2 831 577</u><br>(FRANK FARBER)<br>   * Spalte 3, Zeilen 5 ff;<br>   Fig. 4,5 *<br>     -- | 1 | A 01 D 41/12<br>A 01 F 12/48 |
| A | <u>DE - A1 - 2 922 607</u><br>(CLAAS OHG)<br>   * Seite 6, Zeilen 9 ff;<br>   Fig. 2 *<br>     -- | 2 | |
| A | <u>DE - A1 - 3 218 832</u><br>(SPERRY N.V.)<br>   * Seite 17, 2. Absatz *<br>     -- | 3 | |
| | | 4 | |
| |    * Seite 19, Zeilen 7 ff;<br>   Fig. 3 *<br>   * Seite 17, 3. Absatz - Seite<br>   18 *<br>     ---- | 5 | |

| RECHERCHIERTE SACHGEBIETE (Int. Cl⁵) |
|---|
| A 01 D 41/00<br>A 01 F 12/00 |

Der vorliegende Recherchenbericht wurde für alle Patentansprüche erstellt.

| Recherchenort | Abschlußdatum der Recherche | Prüfer |
|---|---|---|
| WIEN | 14-03-1990 | SCHNEEMANN |